# EUROPEAN PATENT SPECIFICATION

(11) **EP 1 202 143 B1**
(45) Date of publication and mention of the grant of the patent: **21.06.2006**
(21) Application number: 01830668.8
(22) Date of filing: 24.10.2001
(51) Int. Cl.: G05B 19/4093

(54) **A method for calculating the production cost of the parts processed by a machine for working parts made of wood or similar material and a machine for carrying out such method**
Verfahren zur Berechnung der Produktionskosten von Teilen, welche bearbeitet werden durch eine Maschine zur Bearbeitung von Holz oder ähnliches Materials und eine Maschine zur Ausführung solches Verfahrens
Procédé pour calculer le cout de production des pièces produites par une machine à travailler le bois ou un matériau similaire et machine pour mettre en oeuvre cette méthode

(30) Priority: 26.10.2000 IT RN200043
(43) Date of publication of application: 02.05.2002
(73) Proprietor: SCM GROUP S.p.A., 47900 Rimini (IT)
(72) Inventor: Aureli, Alfredo, c/o SCM Group S.p.A., 47900 Rimini (IT)
(74) Representative: Lanzoni, Luciano

(56) References cited:
- EP-A- 0 314 594
- EP-A- 0 811 941
- EP-A- 0 899 069
- WO-A-98/34767
- DE-A- 3 517 714
- US-A- 5 249 120
- US-A- 5 655 087

## Description

The machine preferably constitutes machining centre of the type comprising a computer numerical control (CNC) system designed to control machine functions. Machines of this kind are frequently found, for example, in the furniture manufacturing industry and include not only high-end machines such as large, high-output, high-flexibility machining centres such as machines known in the trade as copiers (essentially consisting of numerically controlled vertical routing and/or boring machines) but also mid-range machines such as four-face throughfeed moulders for longitudinal moulding of solid wood parts (and which may be combined with end trimming and tenoning units to form corner machining centres) and smaller machines of traditional type such as spindle moulders or low-end vertical routers which while maintaining their conventional basic design, have nevertheless been considerably improved by the addition of state-of-the-art components and

The present invention relates to a method for calculating the production cost of the parts processed by a machine for working parts made of wood or similar material and a machine for currying out such method. features (such as rapid tool change) in order to enhance their productivity and versatility.

The invention relates in particular to a machine of this type fitted with sensors and electronic circuitry designed to capture machine operating data, accept external data entered by a user and, also taking into account other data stored in appropriate storage media, to process these data in their entirety and to use them to perform mathematical calculations.

In the sector of machining centres, according to the current state of the art, there are woodworking machines - some being made even by the Applicant - equipped with data processing systems for automatically controlling the process cycles performed on the workpieces. In practice, these machines are designed to receive data in machine-readable format not only through dedicated software but also through commercially available application software. These input data consist of finished part geometry definitions, cutting parameters used during the process cycle (for example, tool rotation speed, tool feed rate and workpiece feed speed), and objects (for example, tools to be used and corresponding settings) selected from lists forming part of databases of objects that can be accessed by the machine.

In addition to the above, the above mentioned hardware and software systems installed on the machines, especially those of higher performing machines such as medium- to large-size machining centres equipped with CNC control units (and not just PLCs) can also perform the function of adjusting machine kinematic parameters by following assigned values or assigned reference ramps as a function of time and for a defined set of controlled variables. In other terms, the machine-mounted system is capable of closing the space and speed loops for the kinematic variables controlled, performing computations and generating the signals to drive the power actuators used to correct system motion.

For the sake of completeness, it should also be stated that conventional electronic architecture installed on medium-size machines, especially less recent, low performance machines, consist essentially only of a CNC hardware block with its own dedicated user interface (and in most cases the systems are somewhat rigid, with resident software), whereas in more recent, higher performance machines, the CNC block is connected to a PC system through a conventional RS232 type port, and the CNC is programmed using the interface of the PC system comprising customary peripherals, that is to say, at least a screen and a keyboard.

It should also be added that the PC system installed on the machine cannot alone act as a control unit of the machine, that is to say, it cannot take the place of a CNC unit, and thus a CNC unit (or a PLC) is in any case always required.

Moreover, in small-size or low-performance machines, the CNC unit (or the PLC) is seldom assisted by a PC and so operating data are entered through the CNC or PLC interface. A machine of this kind is know from document DE3517714, in which in order to optimize the cutting of a plane-parallel workpiece depending on its size and structure and taking into account surface defects in accordance with the required dimensions of the parts, and in order to use the result of the optimization in order to cut automatically the workpiece, the surface of the workpiece is first determined geometrically and structurally and, on the basis of this information a diagram is produced with the aid of a computer to obtain an optimum workpiece with surfaces of predetermine size and quality. Then, on the basis of the diagram obtained, a computer automatically prepares a movement path for an industrial robot and a working diagram for a separation device, and both units are controlled by the path or diagram. After separation, the components are sorted and stored according to their size and structure.

At present, therefore, machines are normally fitted with a system of one of the types described above.

However, the customary applications, briefly described above, of machines of varying complexity equipped with CNC systems (with or without PC and related user interface) capable of performing the numerical processes required to control machine functions, have the disadvantage that they cannot perform computations relating to batches and/or mixes of products made by the machines themselves, especially computations of estimated or actual production costs as a function of the set of cost parameters involved in the production process. The cost parameters that might be used in such computations are, for example, type and quantities of parts processed by the machine, power requirement, costs due to tool wear, depreciation/amortization, overheads and so on.

Moreover, the computation systems implemented on the machines do not have user interfaces that are flexible enough to allow the systems to be modified or adapted to also provide functions for the management of production batch costs. The reason for this is twofold. Firstly, the systems described above are usually designed for a strictly defined purpose (also to limit the cost of the machine itself). Secondly, to be able to perform computations of the type envisaged above, the machine must be equipped with appropriate sensors and circuitry especially designed for the purpose.

However, cost planning and control for every stage in the production process is increasingly becoming a key aspect of present-day management policies at all levels of industry, down to the smallest, family-run business. It is not surprising, therefore, that the absence of a built-in computation system capable of dealing specifically and accurately with the costing aspects of production represents a notable limitation on the capabilities of machines of the type described above.

It is also known from document EP0811941 a capability predictor which comprises a database of capability of multiple designs is disclosed. The process capability data includes costs, quality, cycle time, and performance models. The process owner provides the data. The developer inputs equations necessary to calculate the predictions based in the selected design characteristics and the user selects the design. A processor calculates the prediction based on the selected design and a display, such as monitor or printer, displays the results of the predictions.**]**

The machine according to the present invention has for an object to overcome the above mentioned drawbacks. The invention, as characterised in the claims, accordingly provides a machine that implements all functions for the acquisition of input data entered by the user operating on the interface available on the machine and that can use such input data to perform production cost planning and control computations for single parts and/or batches and/or mixed batches of parts made by the machine itself, in addition to processing of parameters derived directly from a PLC (or CNC in more advanced models) and from appropriate sensors positioned on the machine.

In practice, the cost computation method takes into account the variables that contribute to increasing the added value of a part processed by the machine to calculate the cost actually sustained to produce a single part or batch of parts. According to general accounting principles, a cost includes any activities that result in the disbursement of economic or financial flows connected with the process of production, that is to say, the activities involving actual expenditure of capital, and the proportion of that expenditure allocated to each single product made calculated using conventional industrial accounting formulas (usually of the polynomial type) which are not given here.

The invention disclosed herein achieves the above mentioned aims through a woodworking machine configuration of the aforementioned type comprising electronic computing means implemented on it (typically including a PC system) and a related interface, the novel aspect of the machine lying in the fact that the electronic computing means are used to implement a method for calculating the production cost of the parts processed by the machine, the method comprising at least the following steps:
- using suitable means to acquire the parameters that define the physical and geometrical properties of the part to be made;
- displaying on the user interface a plurality of items constituting the cost of production of the part;
- enabling the user, through the user interface, to select one or more of the cost items from said plurality of items, and to enter the related production cost parameters;
- calling up from a database the cost parameters relating to the material and machining operations involved in the production of the part being made;
- automatically calculating the production costs of the part on the basis of the selected cost items and the parameters called up from the database;
- displaying on the user interface of the computing means the resulting calculated production cost of at least one of the parts.
   Obviously, the means for acquiring the parameters defining the physical and geometrical properties of the part to be made may include a function enabling the user to select or enter the parameters from the interface of the computing means.
   Another aspect of the present invention is the fact that the database stored in the computing means can also be edited - at least as regards the cost parameter values - from the machine's user interface.
   Yet another novel aspect lies in the fact that the production cost calculation method comprises a further step, performed from the user interface, of setting the number of parts in a batch and of setting batch mixes defined at least according to numbers and type of parts, so that the cost of the batch mix, of a single batch or of a single part can be calculated automatically.
   In the machine according to the invention, the calculation method also comprises a step of transferring to the computing means - implemented by at least one machine controller of the CNC or PLC type - the operating parameters relevant to production cost (cycle time, speed, tools used, tool paths, and so on) measured by the CNC or PLC and used in the automatic calculation of part production cost.
   Moreover, the machine itself may further comprise sensors that measure physical quantities (electricity, power requirements, and so on) which
- although not normally measured because they do not affect the quality of machine operation - are important factors in determining the cost of production. These sensors, together with other sensors for recognising parts and/or tools, are connected to the electronic computing means on the machine and provide the physical quantity measurements and the recognition data that can be processed according to the cost calculation method of the invention.

Furthermore, the actual production cost may be calculated, and not just the estimated cost. The actual cost is calculated on the basis of the real data measured during the production process and not just hypothesised by the user prior to processing or presumptively calculated according to a historical data set. These actual costs and machining times can then added to the historical database where they can be statistically processed and called up for subsequent calculations of estimated costs and machining times.

Therefore, using a machine configuration of the type according to the invention, the user can (using numerical forecast cost parameters entered manually or derived from a historical database) not only estimate the part production cost before starting to process the parts, but can also (using data measured automatically by the machine) calculate the actual cost and times at the end of the process. Both the estimated and actual costs can be obtained quickly and easily directly on the machine.

The advantages brought by the present invention lie essentially in the fact that the results of the product cost calculations, which have an extremely important bearing on company management, are made available immediately and by the machine itself, thus eliminating the need for complex calculations carried out beforehand independently of the machine and, what is more, by expert accounting personnel capable of correctly applying industrial accounting formulas. Another very important advantage is that the calculation method uses data stored in the machine control unit or measured directly by machine-mounted sensors. The immediate availability of production cost, calculated largely on the basis of data coming directly from the machine and hence realistic, makes it possible to immediately assign an accurate value to a given type of product. The advantages of this in terms of marketing that product at the correct price and keeping profit margins under control are notable.

The invention will now be described with reference to the accompanying drawings, which illustrate preferred embodiments of the invention purely by way of example, without restricting the scope of the inventive concept, and in which:
- Figure 1 is a view of the machine tool 1 in its entirety during the processing of a part 2 and shows the CNC machine control unit and the PC type system 3, which is interfaced with the CNC, forms part of the machine itself, implements the cost calculation method and exchanges data with both the CNC and the machine-mounted sensors 5; the illustration shows the sensors 5 designed to read bar codes to automatically recognise the workpieces (the sensors mounted on the worktable) and the tools (the sensors mounted in the tool change area);
- Figure 2 shows a dialog box forming part of the user interface and representing the production cost structure, divided into main and secondary items and including fields for the relevant parameters;
- Figure 3 shows another three dialog boxes for the management of components from a store, materials and products;
- Figure 4 shows a dialog box used to make cost estimates for batches of parts being produced; the dialog box includes part and batch data and resources and materials to be used;
- Figure 5 shows a dialog box used for calculating the actual cost of product batches, including the [Calculate Costs] button used to calculate the actual cost of a selected batch;
- Figure 6 shows a dialog box containing statistical data in table format relating to selected product batches;
- Figure 7 shows a dialog box with a graph representing substantially the same statistical data as the table in Fig. 6;

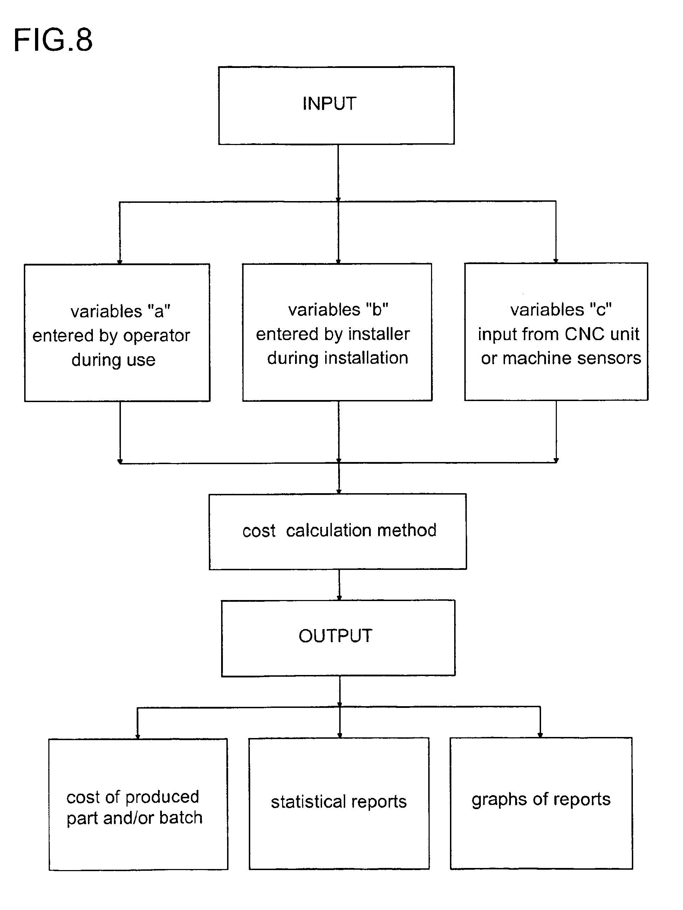

- Figure 8 is a block diagram representing variable input methods and different forms of output provided by the cost calculation method according to the invention.

The numeral 1 denotes in its entirety a woodworking machine whose basic architecture is substantially the same as other well known machines of the same kind, but whose performance presents numerous innovative features thanks to improved machine-mounted electronic circuitry and processing capacity, as described in more detail below. The preferred embodiment described relates to a medium-sized machining centre such as a high-end CNC routing machine (also known as copier in the jargon of the trade). The machine is equipped with a control unit (the CNC unit) which controls all the operating parameters of the machine and uses feedback to adjust these parameters to guarantee correct tool movements.

Besides the CNC unit, the machine 1 made according to the invention is equipped with additional computer hardware 3, consisting of a conventional PC system with a standard user interface and equipped with customary peripherals, that is to say, at least a screen and a keyboard.

This system PC, in addition to performing the usual functions of connecting the machine's CNC unit for the purposes of data entry and dialog with the user, also runs a program that implements a method for calculating the production costs of the parts 2 processed by the machine 1, the characteristic features of the program being described in the appended claims hereof.

In the machine 1 made according to the invention, the data held by the CNC can be exchanged automatically with the PC and then processed according to the cost calculation method by the PC program. For the purposes of the present invention, the machine is also equipped with a set of sensors designed to measure the instantaneous power absorbed from the mains and to read bar codes identifying the workpieces being processed (the sensors mounted on the work table) and the tools commonly used. The sensors are connected to the PC and the signals they generate are used by the PC program to calculate the costs. In the case of the power parameters, for example, the program finds the signal's integral over time and thus provides as output the power requirement (and related cost) during each stage in the production cycle.

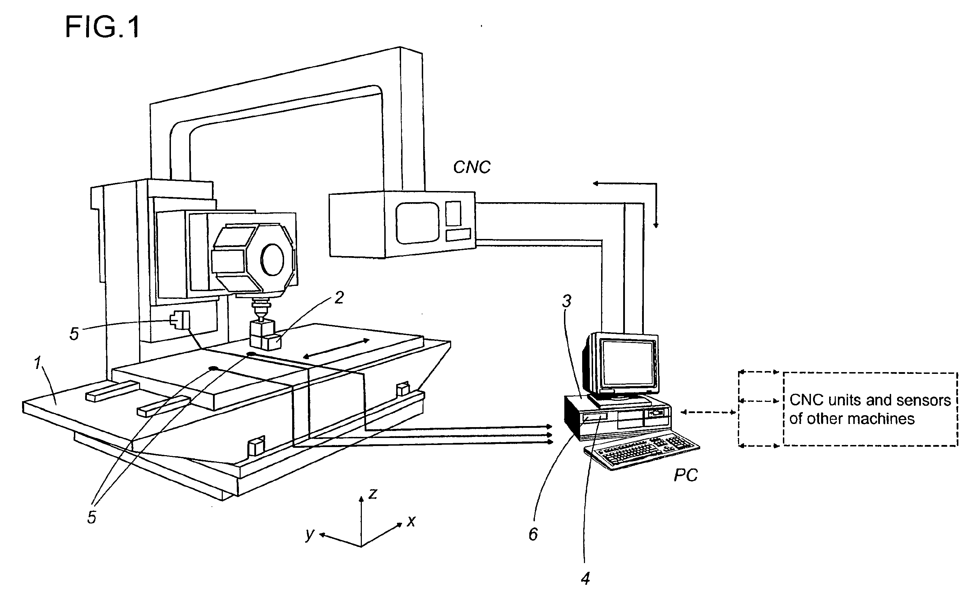

The basic structure of the hardware system is represented in Figure 1, which illustrates the CNC unit, the PC system, the sensors and the interconnections between them as blocks. Figure 1 also shows that the PC may be connected to other CNC units of other machines. If the machine 1 belongs to a machining island where the parts 2 undergo several different processes, the PC 3 of the machine 1 can be used to program the CNC units of the entire machining island. Thus, since the PC 3 of the machine 1 receives not only from the CNC unit and sensors of the machine but also from the other CNC units and sensors forming part of the same machining island, the cost calculation method implemented on the PC 3 of the machine 1 can be used to calculate the cost of the entire production cycle performed by the different machines forming part of the island.

The cost calculation method implemented on the PC, in combination with the sensors mounted on the machine and with the serial connection between PC and CNC (of customary type and therefore not described), makes it possible to calculate the unit production cost of parts or batches of semifinished products made of wood or similar materials processed by the machine. The software functions used to do this are described below.

The method is based on the concept of "cost tree". This object is used to graphically describe the production cost structure as a tree structure made up of many different cost items, that is, the "branches" of the tree.

The user interface provides access to the different software functions through the main menu options described in Table 1 below:

**- TABLE 1 -**

| |
|---|
| ➢ **File** |
| ➢ **Production Cost Structure**: Allows the user to work on the cost tree. |
| ➢_______________ |
| ➢ **Copy Database**: Makes a Backup copy of the entire database on a floppy disk. |
| ➢ **Restore Database:** Retrieves the database from the floppy disk so it can be re-used. |
| ➢_________________________ |
| ➢ **End:** Exits the program. |
| _ **Archives** |
| ➢ **Components from Store**: Provides access to components from warehouse. |
| ➢ **Materials**: Provides access to production materials. |
| ➢ **Products:** Provides access to products in price list. |
| _ **Costs** |
| ➢ **Create New Batch**: Allows the user to create a new batch and estimate its cost. |
| ➢ **Actual Batch Costs:** Allows calculation of the actual cost of finished batches. |
| ➢_________________________ |
| ➢ **Statistics:** Processes historical batch data to obtain different statistical reports. |

The functions and use of the calculation method will now be described in more detail with reference to individual cost items and with the help of the accompanying drawings.

### _ File

### ➢ Production Cost Structure...:

This menu item provides access to the production cost structure, that is, the tree structure whose main and secondary branches identify a class of cost items or variables. Its hierarchical form graphically represents the inter-relations between all the cost items that add up to make the total production cost. The cost structure represents the costs of an organisation at a given time.

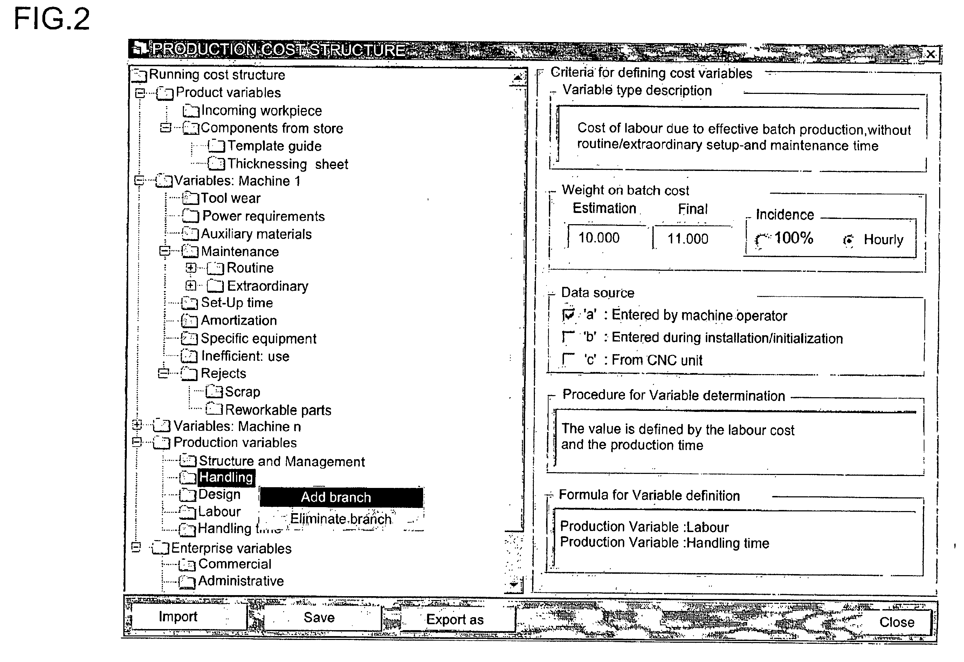

This representation is accomplished in a dialog box like the one shown in Figure 2. The cost structure or "tree" is displayed on the left of the dialog box, while the right-hand section of the dialog box contains the criteria defining the selected cost variable. This tool embodies the claimed function of displaying on the user interface of the computer means 3 (in this case, the PC) the plurality of items constituting the cost of production of the part.

Each single cost item is described in terms of the following criteria:
- Description of variable type.
- Its cost value, both estimated and actual, and the weight that this has on batch cost.
- Source of data.
- Procedure used to define the cost variable.
- Formula used to define the cost variable.

In the cost structure, clicking the right-hand mouse button causes a context menu of the type [Add Branch] and [Eliminate Branch] to be displayed. This context menu can be used to add a branch that depends on the selected branch or to delete the selected branch.

The cost structure dialog box also contains a set of buttons used to perform different operations, as described below:
[Import]: Imports a class of variables from a database to which it has been exported.
[Save] : Saves the changes made to the current cost tree.
[Export as]: Exports a class of variables under a specified name to a specified database.
[Close]: Closes the dialog box.

### _ File

### ➢ Copy Database ...:

This menu item can be used to make a backup copy of the database on a floppy disk.

### _ File

### ➢ Restore Database...:

This menu item can be used to restore a backup copy of the data from a floppy disk.

### _ File

### ➢ End:

This menu item can be used to close the program.

### _ Archives

### ➢ Components from Store:

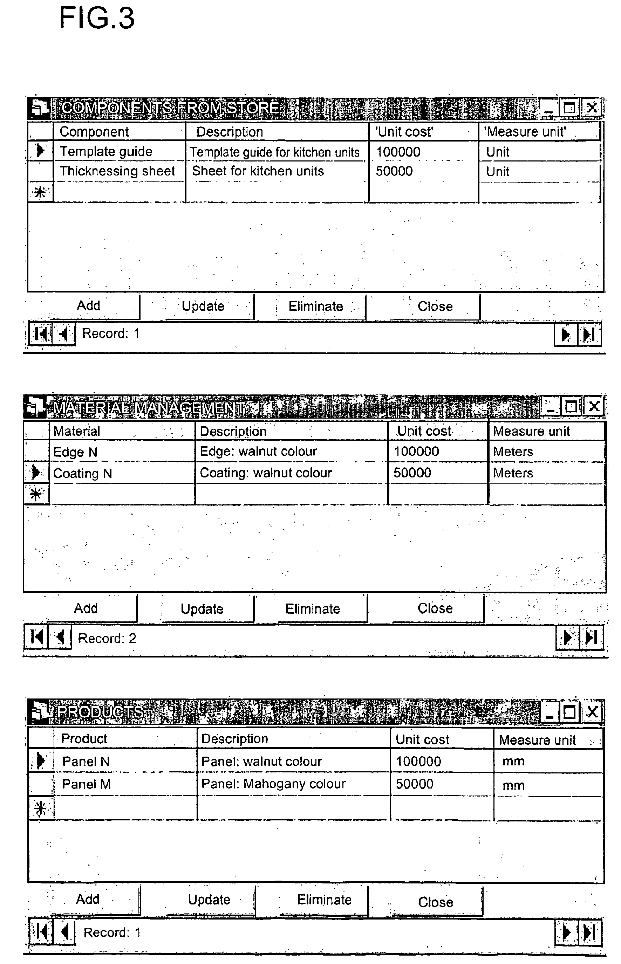

This menu item provides access to components from the warehouse (see Figure 3)

### _ Archives

### ➢ Materials:

This menu item provides access to production materials (see Figure 3).

### _ Archives

### ➢ Products:

This menu item provides access to products in price list (see Figure 3).

### _Costs

### ➢ Create New Batch:

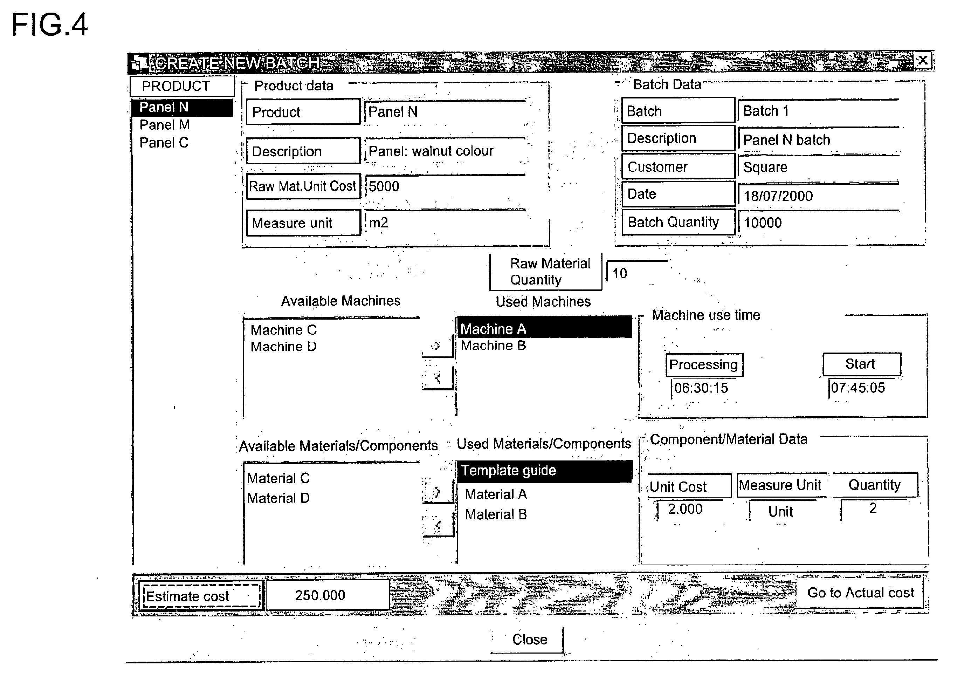

This menu item can be used to create a new batch and calculate its estimated cost. The estimated cost is calculated on the basis of the following:
- The current data in the cost structure.
- The data entered in the dialog box (see Figure 4), namely:

- Product and quantities required.
- Data relating to the machines used to make the product.
- Data relating to Components from Store and/or Materials.

The dialog box illustrated in Figure 4 also contains the following buttons:
[Estimate Cost]: This button calculates the estimated cost of the batch using the cost parameters entered.
[Go to Actual Cost]: This button is used to convert an estimated batch into an actual batch, whose actual data can be checked.

### _ Costs

### ➢ Actual Batch Costs:

This menu item can be used to control the actual costs of finished batches. For each batch, the final production cost can be calculated and/or recalculated using the [Calculate Costs] button. The costs are calculated also on the basis of the current data in the cost structure.

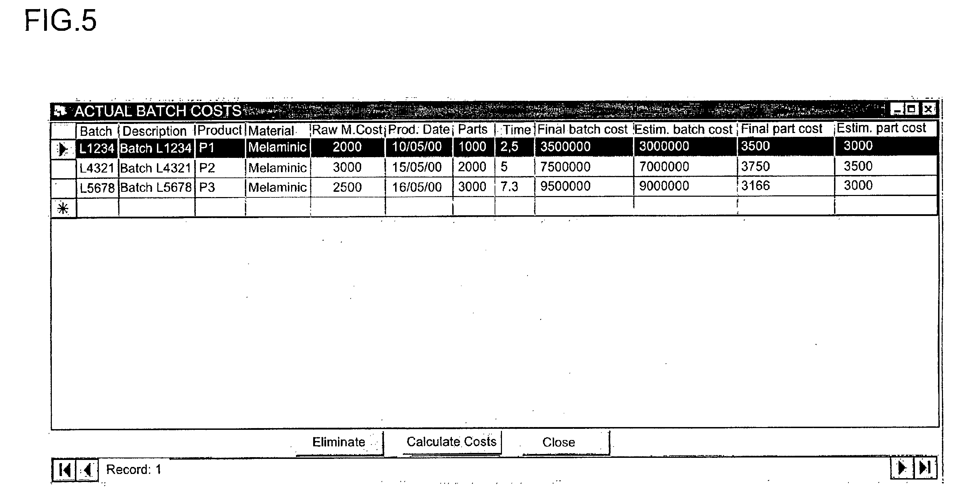

The dialog box (see Figure 5) contains the following buttons:
[Eliminate]: Eliminates the selected record.
[Calculate Costs]: Calculates and/or recalculates the final production costs of the batch. The costs are calculated also on the basis of the current cost structure. The calculated parameters are added to a historical database 6. Some of the data used for the automatic calculation are drawn from this database.

### _ Costs

### ➢ Statistics:

This menu item is used to process past batch data, in practice the historical database 6, in order to obtain different statistical reports. The batches whose data is to be processed can be selected using search filters and sorted according to batch fields. The output can be displayed in either table or graphic format.

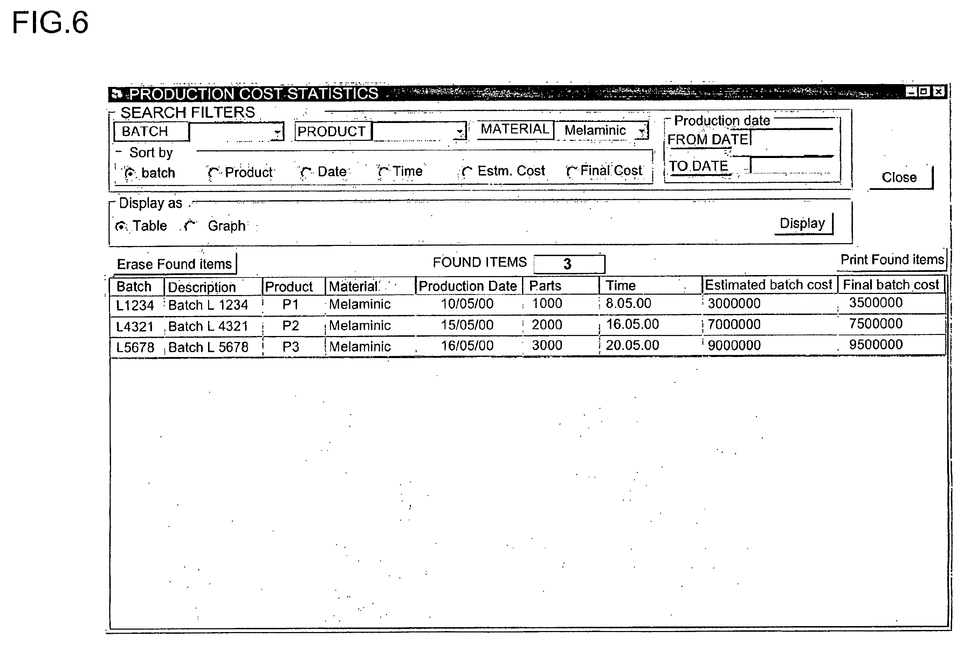

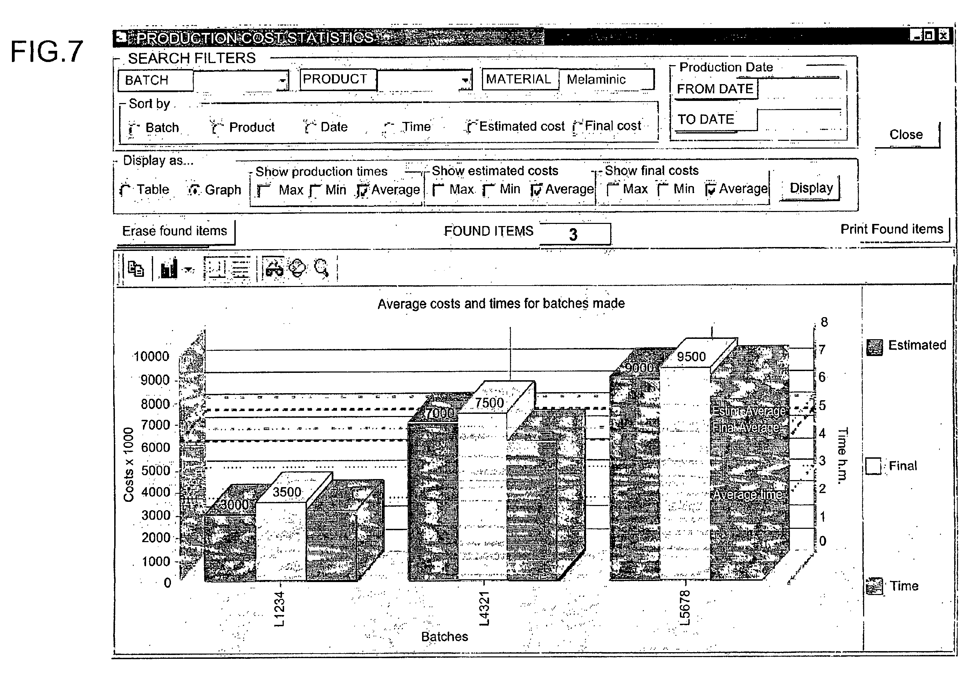

When output in table format is selected, a dialog box like the one shown in Figure 6 is displayed. When graphic format is selected, the resulting output is a graph similar to the one shown in Figure 7.

The control of these dialog boxes and functions in terms of the software programming required to obtain them is not discussed here since it falls well within the field of prior art and is well known to experts in the sector of information technology.

Operatively, on the other hand, the cost calculation method implemented on the machine can be used to control the following types of functions:
- Final cost analysis of products made by the machine.
- Detailed lists of cost items.
- Summary reports.
- Printing of documents.
- Historical batch database which can be subjected to statistical processing.

To produce the above, the program defines the cost items that are required to make the end product.

These items generate the machining cost of the product and can be divided into four basic classes, namely:
- product variables;
- machine variables;
- production variables;
- enterprise variables.

For convenience, the variables can be further subdivided into the following categories, conventionally called «a», «b» and «c», where:
- variables of type «a» are variables entered through the user interface by the operator who is using the machine;
- of type «b» are variables entered by the system during initialisation of the machine or of the program;
- variables of type «c» are variables captured directly by the CNC and/or data accessible by the PC or through the machine-mounted sensors.

The product, machine, production and enterprise variables can be further broken down as shown in Table 2 below. For each variable, the relevant category «a», «b», or «c» is shown in brackets.

**- TABLE 2 -**

| |
|---|
| **PRODUCT VARIABLES** |
| Total initial value of part fed into the machine (a). |
| Value of components (if any) taken from store (a,b,c). |
| **MACHINE VARIABLES** |
| Tool wear (a, b, c); |
| Power requirements (electricity, etc.) (b, c); |
| Auxiliary materials (oils, adhesives, etc.) (b, c); |
| Maintenance: |
| - routine |
| labour (b, c) |
| materials (b, c); |
| - extraordinary |
| labour (b, c) |
| materials (b, c). |
| Hardware / Software setup (b). |
| Specific equipment (b). |
| Amortization: |
| - machine (b) |
| - tools (b). |
| Losses due to inefficient machine use (b, c). |
| Rejects: |
| - scrapped (a) |
| - reworkable (a). |
| **PRODUCTION VARIABLES** |
| Structure and management: |
| Labour (b, c). |
| Auxiliary material (b, c). |
| Handling (b, c). |
| Preparation of part programs (b). |
| **ENTERPRISE VARIABLES** |
| Commercial (b, c). |
| Administrative (b, c). |
| Amortization of buildings(b, c). |
| Maintenance of buildings (b, c). |
| Air conditioning / heating (b, c). |
| Design (b, c). |

By way of example, the item «Tool Wear» is defined as the value of the working tool transferred to the product during machining. To calculate it, one must know the actual machining time of the tool (measured by the CNC unit), the type of material machined (entered by the operator or read by an appropriate workpiece recognition sensor forming part of the set of sensors 5), and the type of tool being used (also entered by the operator or read by an appropriate tool recognition sensor forming part of the set of sensors 5).

The formula by which this cost item is calculated is a known accounting formula and is therefore not given in the present patent specification.

Similar reasoning and considerations also apply to the other cost items which will therefore be omitted for the sake of brevity.

Lastly, the data which the PC type system 3 can obtain from the machine-mounted sensors or from the CNC unit are mentioned below. These data are the following:
- Type of tool (size, shape).
- Spindle rpm.
- Working tool path.
- Working tool machining time.
- Total machining time (hours).
- Hardware / Software set-up time.
- Time for preparation of part program.
- Number of workpieces machined per batch.
- Time for machining one batch.

The machine made according to the invention as described above achieves the preset aims thanks to the interactions between its components parts and the program implemented on it, to form a cost calculation and resource management method without having to significantly modify its basic existing structure.

The invention described can be subject to modifications and variations without thereby departing from the scope of the inventive concept. Moreover, all the details of the invention may be substituted by technically equivalent elements.

## Claims

1. A method for calculating the production cost of the parts (2) processed by a machine for working parts (2) made of wood or similar materials, comprising at least the following steps:
- acquiring parameters that define the physical and geometrical properties of the part (2) to be made;
- displaying on a user interface of electronic computing means (3) a plurality of items constituting the production cost of the part (2) ;
- enabling the user, through a user interface of the electronic computing means (3), to select one or more of the cost items from said plurality of items, and to enter the related production cost parameters;
- calling up from an existing database (4) stored in the electronic computing means (3) the cost parameters relating to the material and machining operations involved in the production of the part (2) being made;
- automatically calculating the production cost of the part (2) on the basis of the cost items selected by the user and the parameters called up from the database (4) ;
- displaying on the user interface of the computing means (3) the resulting calculated production cost of at least one of the parts (2) ;
**characterised in that** it also comprises a step by which a PLC or CNC unit of said machine (1), implemented with the electronic computing means (3), transfers to the electronic computing means (3) parameters relating to operation, set-up or machine process cycles in order to automatically calculate the production cost of the parts (2).

2. The method as described in claim 1, **characterised in that** the step of acquiring the parameters defining the physical and geometrical properties of the part (2) to be made consist of enabling the user to select the parameters through the user interface of the computing means (3).

3. The method as described in claim 1 or 2, **characterised in that** the database (4) stored in the computing means (3) can also be edited - at least as regards the cost parameter values - from the user interface of the computing means (3).

4. The method as described in any of the foregoing claims, **characterised in that** it comprises a further step, performed from the user interface, of setting the number of parts in a batch so that the production cost of both the single part (2) and of the batch of parts (2) can be calculated automatically.

5. The method as described in claim 4, **characterised in that** it further comprises a step, performed from the user interface, of setting different batches of parts (2), it being possible to set the number and type of parts in each batch so that the cost of at least one of the production costs of the entire batch mix, of the single batch of parts (2) or of the single part (2) can be calculated automatically.

6. The method as described in any of the foregoing claims, **characterised in that** it further comprises a step of measuring physical quantities, relating to machine operation and constituting production cost parameters, by sensors (5) in communication with the electronic computing means (3), whereby the physical quantities measured are transferred and processed by the electronic computing means (3) in order to automatically calculate the production cost.

7. The method as described in any of the foregoing claims, **characterised in that** it can calculate both the estimated cost and the final, actual cost of the parts (2) or batches of them.

8. The method as described in claim 7 **characterised in that** it further comprises a step of automatically updating a historical database (6) stored in the electronic computing means (3) and containing actual production costs and parameters calculated in the past, where the historical data stored in the database (6) can be called up at any later stage in order to calculate the estimated production cost of parts (2) to be made.

9. The method as described in claim 8 **characterised in that** it further comprises a step of processing the historical database (6) stored in the electronic computing means (3) to produce statistical reports, particularly the average values of machining times and actual production costs, as well as the maximum and minimum values of the same.

10. A machine for working parts (2) made of wood or similar materials for carrying out the method of claims 1 to 9, comprising:
- means for acquiring parameters that defines the physical and geometrical properties of the part (2) to be made,
- electronic commuting means (3) provided with a user interface for displaying a plurality of items constituting the production cost of the part (2) ear for enabling the user, through the user interface of the electronic computing means (3), to select one or more of the cost items from said plurality of items, and to enter the related production cost parameters;
- a database (4) stored in the electronic computing means (3) from which to call up the cost parameters relating to the material and machining operations involved in the production of the part (2) being made, in order to allow the electronic computing means (3) to automatically calculate the production cost of the part (2) on the basis of the cost items selected by the user and the parameters called up from the database (4) and to display on the user interface of the computing means (3) the resulting calculated production cost of at least one of the parts (2) ; wherein the electronic computing means (3) are implemented with at least one machine function controller of the CNC or PLC type, the PLC or CNC unit transferring to the electronic computing means (3) parameters relating to operation, set-up or machine process cycles in order to automatically calculate the production cost of the parts (2).

11. The machine for working parts (2) made of wood as described in claim 10, **characterised in that** the means for acquiring the parameters defining the physical and geometrical properties of the part (2) to be made consist of a function enabling the user to select the parameters through the user interface of the computing means (3).

12. The machine for working parts (2) made of wood as described in claim 10 or 11, **characterised in that** the database (4) stored in the computing means (3) can also be edited - at least as regards the cost parameter values - from the user interface of the computing means (3).

13. The machine for working parts (2) made of wood as described in any of the foregoing claims from 10 to 12, **characterised in that** it comprises sensors (5) for measuring physical quantities relating to machine operation and constituting production cost parameters, the sensors (5) being in communication with the electronic computing means (3), whereby the physical quantities measured are transferred and processed by the electronic computing means (3) in order to automatically calculate the production coat.

14. A computer program for controlling the steps of claims 1 to 9 when said programm is run on a computer.

## Patentansprüche

1. Verfahren zur Berechnung der Produktionskosten von Teilen (2), verarbeitet durch eine Maschine zur Bearbeitung von Teilen (2) aus Holz oder ähnlichen Materialien, enthaltend wenigstens die folgenden Phasen:
- Erfassen von Parametern, welche die physischen und geometrischen Eigenschaften des herzustellenden Teils (2) festlegen;
- Sichtbarmachung auf einer Benutzerschnittstelle von elektronischen Kalkulationsmitteln (3) von einer Anzahl von Kostenelementen, welche die Produktionskosten des Teils (2) darstellen;
- Befähigung des Benutzers über eine Benutzerschnittstelle der elektronischen Kalkulationsmittel (3), eine oder mehrere Kostenelemente aus der genannten Anzahl von Elementen zu wählen und die entsprechenden Parameter der Produktionskosten einzugeben;
- Abruf aus einer vorhandenen Datenbank (4), die in den elektronischen Kalkulationsmitteln (3) gespeichert ist, der Kostenparameter, die sich auf das Material und auf die in die Produktion des herzustellenden Teils (2) einbezogenen Bearbeitungsabläufe beziehen;
- automatisches Berechnen der Produktionskosten des Teils (2) auf der Basis der durch den Benutzer gewählten Kostenelemente und der aus der Datenbank (4) abgerufenen Parameter;
- Sichtbarmachung auf der Benutzerschnittstelle der Kalkulationsmittel (3) der resultierenden berechneten Produktionskosten von wenigstens einem der Teile (2);
**dadurch gekennzeichnet, dass** es ebenfalls eine Phase enthält, durch welche eine PLC- oder CNC-Einheit der genannten Maschine (1), verbunden mit den elektronischen Kalkulationsmitteln (3), an die elektronischen Kalkulationsmittel (3) Parameter überträgt, die sich auf den Ablauf, die Einstellung oder die Prozesszyklen der Maschine beziehen, um automatisch die Produktionskosten der Teile (2) berechnen zu können.

2. Verfahren nach Patentanspruch 1, **dadurch gekennzeichnet, dass** die Phase des Erfassens der Parameter, welche die physischen und geometrischen Eigenschaften des herzustellenden Teils (2) festlegen, aus der Befähigung des Benutzers besteht, die Parameter über die Benutzerschnittstelle der Kalkulationsmittel (3) zu wählen.

3. Verfahren nach Patentanspruch 1 oder 2, **dadurch gekennzeichnet, dass** die in den Kalkulationsmitteln (3) gespeicherte Datenbank (4) - wenigstens betreffend die Werte der Kostenparameter - auch von der Benutzerschnittstelle der Kalkulationsmittel (3) her editiert werden kann.

4. Verfahren nach einem beliebigen der vorstehenden Patentansprüche, **dadurch gekennzeichnet, dass** es eine weitere, von der Benutzerschnittstelle her ausgeführte Phase des Einstellens einer Anzahl von Teilen in einer Charge enthält, so dass die Produktionskosten des einzelnen Teils (2) sowie der Charge von Teilen (2) automatisch berechnet werden können.

5. Verfahren nach Patentanspruch 4, **dadurch gekennzeichnet, dass** es eine weitere, von der Benutzerschnittstelle her ausgeführte Phase des Einstellens von unterschiedlichen Chargen von Teilen (2) enthält, wobei es möglich ist, die Zahl und den Typ der Teile in jede Charge einzugeben, so dass die Kosten von wenigstens einer der Produktionskosten der gesamten Chargenmischung, der einzelnen Charge von Teilen (2) oder des einzelnen Teils (2) automatisch berechnet werden kann.

6. Verfahren nach einem beliebigen der vorstehenden Patentansprüche, **dadurch gekennzeichnet, dass** es ausserdem eine Phase des Erfassens von physischen Mengen enthält, den Bearbeitungsablauf betreffend und die Parameter der Produktionskosten bildend, und zwar durch Fühler (5) in Kommunikation mit den elektronischen Kalkulationsmitteln (3), durch welche die Erfassungsdaten der physischen Mengen an die elektronischen Kalkulationsmittel (3) transferiert und von diesen verarbeitet werden, um automatisch die Produktionskosten zu berechnen.

7. Verfahren nach einem beliebigen der vorstehenden Patentansprüche, **dadurch gekennzeichnet, dass** es die geschätzten Kosten und die endgültigen, tatsächlichen Kosten der Teile (2) oder Chargen von diesen berechnen kann.

8. Verfahren nach Patentanspruch 7, **dadurch gekennzeichnet, dass** es weiter eine Phase der automatischen Aktualisierung einer vorhandenen Datenbank (6) enthält, gespeichert in den elektronischen Kalkulationsmitteln (3) und enthaltend die in der Vergangenheit berechneten Produktionskosten und Parameter, wo die in der Datenbank (6) gespeicherten vorhandenen Daten zu jedem späteren Zeitpunkt abgerufen werden können, um die geschätzten Produktionskosten der herzustellenden Teile (2) zu berechnen.

9. Verfahren nach Patentanspruch 8, **dadurch gekennzeichnet, dass** weiter eine Phase der Verarbeitung der vorhandenen Datenbank (6) enthält, gespeichert in den elektronischen Kalkulationsmitteln (3), um statistische Angaben, insbesondere die Durchschnittswerte von Bearbeitungszeiten und aktuellen Produktionskosten, wie auch deren maximale und minimale Werte zu erhalten.

10. Maschine zur Bearbeitung von Teilen (2) aus Holz oder ähnlichen Materialien, auszuführen nach dem Verfahren der Patentansprüche von 1 bis 9, enthaltend:
- Mittel zum Erfassen von Parametern, welche die physischen und geometrischen Eigenschaften des herzustellenden Teils (2) festlegen;
- elektronische Kalkulationsmittel (3), versehen mit einer Benutzerschnittstelle zur Sichtbarmachung einer Anzahl von Elementen, welche die Produktionskosten des Teils (2) darstellen, und zur Befähigung des Benutzers, über die Benutzerschnittstelle der elektronischen Kalkulationsmittel (3) eine oder mehrere der Kostenelemente aus der genannten Anzahl von Elementen zu wählen und die betreffenden Parameter der Produktionskosten einzugeben;
- eine in den elektronischen Kalkulationsmitteln (3) gespeicherte Datenbank (4), aus welcher die Kostenparameter abgerufen werden, die sich auf das Material und die Bearbeitungsabläufe beziehen, die in die Produktion des herzustellenden Teils (2) einbezogen sind, um es den elektronischen Kalkulationsmitteln (3) zu erlauben, automatisch die Produktionskosten des Teils (2) auf der Basis der durch den Benutzer gewählten Kostenelemente und der aus der Datenbank (4) abgerufenen Parameter zu berechnen und auf dem Display auf der Benutzerschnittstelle der Kalkulationsmittel (3) die sich ergebenden berechneten Produktionskosten von wenigstens einem der Teile (2) anzuzeigen, wobei die elektronischen Kalkulationsmittel (3) mit wenigstens einem Steuergerät der Maschinenfunktionen vom Typ CNC oder PLC verbunden sind, und wobei die CNC- oder PLC-Einheit an die elektronischen Kalkulationsmittel (3) Parameter überträgt, die sich auf den Ablauf, die Einstellung oder die Prozesszyklen der Maschine beziehen, um automatisch die Produktionskosten der Teile (2) zu berechnen.

11. Maschine zur Bearbeitung von Teilen (2) aus Holz nach Patentanspruch 10, **dadurch gekennzeichnet, dass** die Mittel zum Erfassen der Parameter, welche die physischen und geometrischen Eigenschaften des herzustellenden Teils (2) festlegen, aus einer Funktion bestehen, welche den Benutzer befähigt, die Parameter über die Benutzerschnittstelle der Kalkulationsmittel (3) zu wählen.

12. Maschine zur Bearbeitung von Teilen (2) aus Holz nach Patentanspruch 10 oder 11, **dadurch gekennzeichnet, dass** die in den Kalkulationsmitteln (3) gespeicherte Datenbank (4) - wenigstens betreffend die Werte der Kostenparameter - auch von der Benutzerschnittstelle der Kalkulationsmittel (3) her editiert werden kann.

13. Maschine zur Bearbeitung von Teilen (2) aus Holz nach einem der vorstehenden Patentansprüche von 10 bis 12, **dadurch gekennzeichnet, dass** sie Fühler (5) zum Erfassen von physischen Mengen enthält, den Bearbeitungsablauf betreffend und die Parameter der Produktionskosten bildend, wobei die Fühler (5) in Kommunikation mit den elektronischen Kalkulationsmitteln (3) stehen, und durch welche die Erfassungsdaten der physischen Mengen an die elektronischen Kalkulationsmittel (3) transferiert und von diesen verarbeitet werden, um automatisch die Produktionskosten zu berechnen.

14. Computerprogramm zum Steuern der Phasen nach den Patentansprüchen von 1 bis 9, wenn das genannte Programm auf einem Computer abläuft.

## Revendications

1. Un procédé pour calculer le coût de production des pièces (2) produites par une machine pour l'usinage de pièces (2) en bois ou matériaux similaires, comprenant au moins les phases suivantes :
- acquérir des paramètres qui définissent les propriétés physiques et géométriques de la pièce (2) à réaliser ;
- afficher, sur une interface utilisateur de moyens de calcul électronique (3), une pluralité d'éléments constituant le coût de production de la pièce (2) ;
- permettre à l'utilisateur, via une interface utilisateur des moyens de calcul électronique (3), de sélectionner un ou plusieurs des éléments de coût parmi ladite pluralité d'éléments et d'entrer les paramètres correspondants de coût de production ;
- rappeler, depuis une base de données existante (4) mémorisée dans les moyens de calcul électronique (3), les paramètres de coût relatifs aux matériaux et aux opérations d'usinage impliqués dans la production de la pièce (2) à réaliser ;
- calculer automatiquement le coût de production de la pièce (2) sur la base des éléments de coût sélectionnés par l'utilisateur et des paramètres rappelés depuis la base de données (4) ;
- afficher, sur l'interface utilisateur des moyens de calcul (3), le coût de production calculé résultant d'au moins une des pièces (2) ;
ledit procédé étant **caractérisé en ce qu'**il comprend aussi une phase durant laquelle une unité PLC ou CNC de ladite machine (1), mise en oeuvre avec les moyens de calcul électronique (3), transfère aux moyens de calcul électronique (3) eux-mêmes des paramètres concernant le fonctionnement, la mise au point ou les cycles d'usinage de la machine de manière à calculer automatiquement le coût de production des pièces (2).

2. Le procédé tel que décrit dans la revendication 1, **caractérisé en ce que** la phase d'acquisition des paramètres définissant les propriétés physiques et géométriques de la pièce (2) à réaliser consiste à permettre à l'utilisateur de sélectionner les paramètres via l'interface utilisateur des moyens de calcul (3).

3. Le procédé tel que décrit dans la revendication 1 ou 2, **caractérisé en ce que** la base de données (4) mémorisée dans les moyens de calcul (3) peut aussi être éditée - au moins en ce qui concerne les valeurs des paramètres de coût - à partir de l'interface utilisateur des moyens de calcul (3).

4. Le procédé tel que décrit dans l'une quelconque des revendications précédentes, **caractérisé en ce qu'**il comprend une autre phase, effectuée à partir de l'interface utilisateur, qui consiste à définir le nombre de pièces dans un lot de manière à ce que le coût de production de la pièce (2) unitaire comme du lot de pièces (2) puisse être calculé automatiquement.

5. Le procédé tel que décrit dans la revendication 4, **caractérisé en ce qu'**il comprend en outre une phase, effectuée à partir de l'interface utilisateur, qui consiste à définir différents lots de pièces (2), le nombre et le type de pièces pouvant être définis dans chaque lot de manière à ce que le coût d'au moins un des coûts de production de tout le mix de lots, du lot unitaire de pièces (2) ou de la pièce unitaire (2) puisse être calculé automatiquement.

6. Le procédé tel que décrit dans l'une quelconque des revendications précédentes, **caractérisé en ce qu'**il comprend en outre une phase consistant à mesurer des quantités physiques, concernant le fonctionnement de la machine et constituant des paramètres de coût de production, au moyen de capteurs (5) qui sont en communication avec les moyens de calcul électronique (3), par l'intermédiaire desquels les quantités physiques mesurées sont transférées et traitées par les moyens de calcul électronique (3) de manière à calculer automatiquement le coût de production.

7. Le procédé tel que décrit dans l'une quelconque des revendications précédentes, **caractérisé en ce qu'**il peut calculer aussi bien le coût estimé que le coût réel final des pièces (2) ou de lots de celles-ci.

8. Le procédé tel que décrit dans la revendication 7, **caractérisé en ce qu'**il comprend en outre une phase consistant à mettre automatiquement à jour une base de données historique (6) mémorisée dans les moyens de calcul électronique (3) et contenant des coûts de production et des paramètres réels calculés dans le passé, où les données historiques mémorisées dans la base de données (6) peuvent être rappelées à tout moment ultérieur afin de calculer le coût de production estimé de pièces (2) à réaliser.

9. Le procédé tel que décrit dans la revendication 8, **caractérisé en ce qu'**il comprend en outre une phase consistant à traiter la base de données historique (6) mémorisée dans les moyens de calcul électronique (3) pour produire des rapports statistiques, en particulier les valeurs moyennes de temps d'usinage et les coûts de production réels, ainsi que les valeurs maximum et minimum de ceux-ci.

10. Une machine pour l'usinage de pièces (2) en bois ou matériaux similaires pour la mise en oeuvre du procédé des revendications de 1 à 9, comprenant :
- des moyens pour acquérir des paramètres qui définissent les propriétés physiques et géométriques de la pièce (2) à réaliser ;
- des moyens de calcul électronique (3), pourvus d'une interface utilisateur pour afficher une pluralité d'éléments constituant le coût de production de la pièce (2) et pour permettre à l'utilisateur, via l'interface utilisateur des moyens de calcul électronique (3), de sélectionner un ou plusieurs des éléments de coût parmi ladite pluralité d'éléments et d'entrer les paramètres correspondants de coût de production ;
- une base de données (4) mémorisée dans les moyens de calcul électronique (3), depuis laquelle il est possible de rappeler les paramètres de coût relatifs aux matériaux et aux opérations d'usinage impliqués dans la production de la pièce (2) à réaliser, de manière à permettre aux moyens de calcul électronique (3) de calculer automatiquement le coût de production de la pièce (2) sur la base des éléments de coût sélectionnés par l'utilisateur et des paramètres rappelés depuis la base de données (4) et de manière à afficher sur l'interface utilisateur des moyens de calcul (3) le coût de production calculé résultant d'au moins une des pièces (2) ; où les moyens de calcul électronique (3) sont mis en oeuvre avec au moins un contrôleur des fonctions de la machine du type PLC ou CNC, l'unité PLC ou CNC transférant aux moyens de calcul électronique (3) des paramètres concernant le fonctionnement, la mise au point ou les cycles d'usinage de la machine de manière à calculer automatiquement le coût de production des pièces (2).

11. La machine pour l'usinage de pièces (2) en bois telle que décrite dans la revendication 10, **caractérisée en ce que** les moyens d'acquisition des paramètres définissant les propriétés physiques et géométriques de la pièce (2) à réaliser consistent en une fonction permettant à l'utilisateur de sélectionner les paramètres via l'interface utilisateur des moyens de calcul (3).

12. La machine pour l'usinage de pièces (2) en bois telle que décrite dans la revendication 10 ou 11, **caractérisée en ce que** la base de données (4) mémorisée dans les moyens de calcul (3) peut aussi être éditée - au moins en ce qui concerne les valeurs des paramètres de coût - à partir de l'interface utilisateur des moyens de calcul (3).

13. La machine pour l'usinage de pièces (2) en bois telle que décrite dans l'une quelconque des revendications précédentes de 10 à 12, **caractérisée en ce qu'**elle comprend des capteurs (5) pour mesurer des quantités physiques concernant le fonctionnement de la machine et constituant des paramètres de coût de production, les capteurs (5) étant en communication avec les moyens de calcul électronique (3), par l'intermédiaire desquels les quantités physiques mesurées sont transférées et traitées par les moyens de calcul électronique (3) de manière à calculer automatiquement le coût de production.

14. Un programme informatique pour le contrôle des phases des revendications de 1 à 9 quand ledit programme est exécuté sur un ordinateur.
